# EUROPÄISCHE PATENTANMELDUNG

(11) **EP 3 944 136 A1**
(43) Veröffentlichungstag der Anmeldung: **26.01.2022**
(21) Anmeldenummer: 21183480.9
(22) Anmeldetag: 02.07.2021
(51) Int. Cl.: G06K 9/00

(54) **VERFAHREN ZUM PERSONALISIEREN EINES ID-DOKUMENTS UND ID-DOKUMENT**

(30) Priorität: 23.07.2020 DE 102020119531
(71) Anmelder: Bundesdruckerei GmbH, 10969 Berlin (DE)
(72) Erfinder: Peters, Florian, 10437 Berlin (DE); Wolf, Andreas, 13158 Berlin (DE); Grieser, Ralf, 10589 Berlin (DE); Tschorn, Stefan, 16775 Gransee (DE)
(74) Vertreter: Bittner, Thomas L.

(57) **Zusammenfassung**

Die Erfindung betrifft ein Verfahren zum Personalisieren eines ID-Dokuments, welches Folgendes aufweist: Bereitstellen von Bilddaten für eine Person (4) in einer Datenverarbeitungseinrichtung (6); Bestimmen von Kopfmodelldaten, die ein dreidimensionales Kopfmodell für die Person (4) repräsentieren, unter Verwendung der Bilddaten sowie von dem dreidimensionalen Kopfmodell zugeordneten Texturdaten in der Datenverarbeitungseinrichtung (6); Bestimmen von Gesichtsdaten, die ein zweidimensionales Gesichtsbild mit zur biometrischen Gesichtserkennung auswertbaren Gesichtsmerkmalen für die Person (4) repräsentieren, aus den Kopfmodelldaten und der Texturdaten in der Datenverarbeitungseinrichtung (6); und Speichern der Gesichtsdaten in einem Speichermedium (2) eines ID-Dokuments (1). Ferner ist ein ID-Dokument geschaffen.

## Beschreibung

Die Erfindung betrifft Verfahren zum Personalisieren eines ID-Dokuments sowie ein ID-Dokument.

### Hintergrund

Es ist bekannt, Personen anhand von biometrischen Gesichtsmerkmalen zu identifizieren. Hierbei werden üblicherweise aus zweidimensionalen Gesichtsbildern Gesichtsmerkmale abgeleitet, die mit Referenz- oder Vergleichsdaten verglichen werden, die Gesichtsvergleichsmerkmale angeben, um die Person zu identifizieren. Häufig treten Probleme dabei auf, geeignete zweidimensionale Gesichtsbilder oder -abbildungen bereitzustellen. Beim Personalisieren von ID-Dokumenten (ID - Identifikation), beispielsweise in einem Bürger- oder Einwohnermeldeamt, werden die zweidimensionalen Gesichtsbilder als analoger Ausdruck bereitgestellt oder mit einer 2D-Kamera aufgenommen. Hierbei ist es häufig schwierig, verzerrungsfreie zweidimensionale Bilder bereitzustellen, die dann auch geeignet sind, aus den erfassten Bilddaten Gesichtsmerkmale für die biometrische Erkennung oder Identifizierung der Person zu bestimmen.

Um eine gewünschte Qualität der zweidimensionalen Bilder des Gesichts zu erreichen, werden Bildaufnahmeparameter definiert, beispielsweise Abstände zwischen Kamera und Person, Beleuchtung und Hintergrund sowie Eigenschaften der Kamera wie Auflösung, Verzerrung oder Farbtreue. Auch gibt es Vorgaben für weitere dem Erkennungszweck dienende Parameter wie beispielsweise Pose, Gesichtsausdruck, offene Augen und keine Verdeckung der Augen durch Frisur, Brille oder Kopfbedeckung. Es besteht somit ein hoher Aufwand, derartige für die biometrische Gesichtserkennung geeignete zweidimensionale Bildaufnahmen bereitzustellen.

Dokument DE 10 2004 063 186 A1 offenbart ein Verfahren zum Normieren von Kopforientierung und Mimik menschlicher Gesichter in Bildern zum Verbessern der Leistung von Gesichtserkennungssystemen, welches als Vorverarbeitungsstufe für grundsätzlich beliebige Gesichtserkennungsverfahren, die auf 2D-Bildern basieren, einsetzbar ist, ohne eine Merkmalsextraktion bzw. die Merkmale für die Gesichtserkennung selber zu verändern.

### Zusammenfassung

Aufgabe der Erfindung ist es, Verfahren zum Personalisieren eines ID-Dokuments sowie ein ID-Dokument bereitzustellen, mit denen die biometrische Identifizierung einer Person auf Basis von Gesichtsmerkmalen einfacher und mit verbesserter Zuverlässigkeit betreffend die Erkennungsrate durchgeführt werden kann.

Zur Lösung sind Verfahren zum Personalisieren eines ID-Dokuments sowie ein ID-Dokument nach den Ansprüchen 1, 12 und 13 geschaffen. Ausgestaltungen sind Gegenstand von abhängigen Unteransprüchen.

Nach einem Aspekt ist ein Verfahren zum Personalisieren eines ID-Dokuments geschaffen, bei dem Bilddaten für eine Person in einer Datenverarbeitungseinrichtung bereitgestellt werden, wobei die Bilddaten hierbei mittels einer Bildaufnahmeeinrichtung aufgenommen und zumindest im Verlauf des Aufnehmens der Bilddaten wenigstens eine der folgenden Prüfungen ausgeführt wird: Prüfen, ob während des Aufnehmens der Bilddaten erzeugte Bilddaten geeignet sind, die Kopfmodelldaten und die Texturdaten zu bestimmen; und Prüfen, ob während des Aufnehmens der Bilddaten aus zuvor bestimmten Kopfmodelldaten und Texturdaten bestimmte Gesichtsdaten geeignet sind, das zwei-dimensionale Gesichtsbild mit den zur biometrischen Gesichtserkennung aus-wertbaren Gesichtsmerkmalen zu bilden. Das Verfahren umfasst weiterhin Folgendes: Bestimmen von Kopfmodelldaten, die ein dreidimensionales Kopfmodell für die Person repräsentieren, unter Verwendung der Bilddaten sowie von dem dreidimensionalen Kopfmodell zugeordneten Texturdaten in der Datenverarbeitungseinrichtung; Bestimmen von Gesichtsdaten, die ein zweidimensionales Gesichtsbild mit zur biometrischen Gesichtserkennung auswertbaren Gesichtsmerkmalen für die Person repräsentieren, aus den Kopfmodelldaten und der Texturdaten in der Datenverarbeitungseinrichtung; und Speichern der Gesichtsdaten in einem Speichermedium eines ID-Dokuments.

Weiterhin ist ein ID-Dokument geschaffen, welches Gesichtsdaten in einem vom ID-Dokument umfassten Speichermedium aufweist, die ein zweidimensionales Gesichtsbild mit zur biometrischen Gesichtserkennung auswertbaren Gesichtsmerkmalen für eine Person repräsentieren und dem vorangehenden Verfahren entsprechend bestimmt und gespeichert sind, wobei in dem Speichermedium zusätzlich Kopfmodelldaten und Texturdaten für ein dreidimensionales Kopfmodell gespeichert sind, aus denen die Gesichtsdaten bestimmt sind. Nach einem weiteren Aspekt ist ein Verfahren zum Personalisieren eines ID-Dokument, welches Folgendes umfasst: Bereitstellen von Bilddaten für eine Person in einer Datenverarbeitungseinrichtung; Bestimmen von Kopfmodelldaten, die ein dreidimensionales Kopfmodell für die Person repräsentieren, unter Verwendung der Bilddaten sowie von dem dreidimensionalen Kopfmodell zugeordneten Texturdaten in der Datenverarbeitungseinrichtung; Bestimmen von Gesichtsdaten, die ein zweidimensionales Gesichtsbild mit zur bio-metrischen Gesichtserkennung auswertbaren Gesichtsmerkmalen für die Person repräsentieren, aus den Kopfmodelldaten und der Texturdaten in der Datenverarbeitungseinrichtung; und Speichern der Gesichtsdaten für das zweidimensionale Gesichtsbild sowie der Kopfmodelldaten und der Texturdaten für das dreidimensionale Kopfmodell in einem Speichermedium eines ID-Dokuments.

Das Bestimmen der Kopfmodelldaten sowie der zugeordneten Texturdaten, die zusammen Daten für eine dreidimensionale Repräsentation (zum Beispiel Kopfmodell mit zugeordneter Textur) für zumindest eine Vorderansicht des Kopfes der zu identifizierenden Person bilden, ist die Möglichkeit geschaffen, hieraus ein zweidimensionales Gesichtsbild zu bestimmen oder zu berechnen, welches zur biometrischen Gesichtserkennung auswertbare Gesichtsmerkmale für die Person enthält. Das zweidimensionale Gesichtsbild kann so mit gewünschter Auswertequalität variabel und insbesondere verzerrungsfrei bereitgestellt werden, um für die biometrische Erkennung oder Identifizierung der Person herangezogen zu werden. Die für das Aufnehmen einer den Anforderungen zum Bestimmen biometrischer Gesichtsmerkmale genügenden zweidimensionalen Abbildung der Person entfallen. Die hierbei häufig auftretenden Fehlerquellen sind vermieden. Auf diese Weise kann der Identifizierungsprozess für die Person insgesamt verbessert werden, so dass die hierbei auftretende Fehlerquote minimiert ist. Ähnliche Vorteile ergeben sich, wenn beim Identifizieren einer Person die aktuell aufgenommenen Bilddaten dazu verwendet werden, (zunächst) die Kopfmodelldaten und die zugehörigen Texturdaten zu bestimmen, um hieraus dann die Gesichtsdaten für das zweidimensionale Gesichtsbild abzuleiten, um basierend hierauf dann die Gesichtsmerkmale zu bestimmen und mit Referenzdaten zu vergleichen, um die Person zu identifizieren.

Das Speichern der Gesichtsdaten in dem Speichermedium des ID-Dokuments kann erfolgen, bevor das Speichermedium, beispielweise ein Chip oder ein Speicherbaustein, in einen Dokumentenkörper des ID-Dokuments integriert wird. Alternativ kann das Speichern der Gesichtsdaten vorgenommen werden, nachdem das Speichermedium in dem Dokumentenkörper aufgenommen ist.

Das ID-Dokument kann insbesondere ein Ausweis-, Wert- oder Sicherheitsdokument sein, insbesondere ein hoheitliches Dokument, beispielsweise ein papierbasiertes und / oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte oder Firmenausweis oder anderes ID-Dokument wie Berechtigungsnachweis.

Beim Bestimmen der Gesichtsdaten kann geprüft werden, welche zur biometrischen Gesichtserkennung auswertbaren Gesichtsmerkmale die Gesichtsdaten enthalten. Das Prüfen der Gesichtsdaten auf hierin enthaltene zur biometrischen Gesichtserkennung nutzbare Gesichtsmerkmale kann erfolgen, während die Gesichtsdaten aus den Kopfmodelldaten und den Texturdaten bestimmt werden. Alternativ oder ergänzend kann die Prüfung nach Abschluss des Bestimmens der Gesichtsdaten ausgeführt werden. Während des Bestimmens oder Berechnens der Gesichtsdaten kann die Prüfung einmalig oder mehrmalig ausgeführt werden. Die Prüfung in der Datenverarbeitungseinrichtung kann umfassen, die Gesichtsmerkmale auf einen geforderten Qualitätsstatus (Auswertbarkeit für biometrische Gesichtserkennung) hin zu prüfen. Als Reaktion auf die Prüfung kann über eine an die Datenverarbeitungseinrichtung angeschlossene Ausgabeeinrichtung eine Information über das Ergebnis der Prüfung an dem Benutzer ausgegeben werden, beispielsweise dahingehend, welche Gesichtsmerkmale mit ausreichender Qualität aus den momentanen zur Verfügung stehenden Gesichtsdaten bestimmbar sind.

Das Bereitstellen der Bilddaten kann ein Aufnehmen der Bilddaten mittels einer Bildaufnahmeeinrichtung umfassen, wobei zumindest im Verlauf des Aufnehmens der Bilddaten wenigstens eine der folgenden Prüfungen ausgeführt wird: Prüfen, ob während des Aufnehmens der Bilddaten erzeugte Bilddaten geeignet sind, die Kopfmodelldaten und die Texturdaten zu bestimmen; und Prüfen, ob während des Aufnehmens der Bilddaten aus zuvor bestimmten Kopfmodelldaten und Texturdaten bestimmte Gesichtsdaten geeignet sind, das zweidimensionale Gesichtsbild mit den zur biometrischen Gesichtserkennung auswertbaren Gesichtsmerkmalen zu bilden. Noch während das Aufnehmen der Bilddaten läuft, wird wenigstens eine der beiden Prüfungen durchgeführt. Dieses kann zum Beispiel in der Datenverarbeitungseinrichtung ausgeführt werden. So kann beispielsweise ein Nutzer der Bildaufnahmeeinrichtung während des Erfassens der Bilddaten unmittelbar in Abhängigkeit des jeweiligen Prüfprozesses reagieren, zum Beispiel durch eine Änderung der Beleuchtung für die Bildaufnahmen und / oder einen Hinweis an die zu identifizierende Person hinsichtlich ihrer Kopfstellung relativ zur Bildaufnahmeeinrichtung.

In der Datenverarbeitungseinrichtung können auf das Prüfen Rückmeldedaten bereitgestellt und über eine Ausgabeeinrichtung ausgegeben werden, die wenigstens eine der folgenden Rückmeldungen anzeigen: das Aufnehmen der Bilddaten ist fortzusetzen, wenn die Bilddaten nicht geeignet sind, die Kopfmodelldaten und die Texturdaten zu bestimmen; das Aufnehmen der Bilddaten kann beendet werden, wenn die Bilddaten geeignet sind, die Kopfmodelldaten und die Texturdaten zu bestimmen; das Aufnehmen der Bilddaten ist fortzusetzen, wenn die Gesichtsdaten nicht geeignet sind, das zweidimensionale Gesichtsbild mit den zur biometrischen Gesichtserkennung auswertbaren Gesichtsmerkmalen zu bilden; und das Aufnehmen der Bilddaten kann beendet werden, wenn die Gesichtsdaten geeignet sind, das zweidimensionale Gesichtsbild mit den zur biometrischen Gesichtserkennung auswertbaren Gesichtsmerkmalen zu bilden. Ein Benutzer der Bildaufnahmeeinrichtung oder der Datenverarbeitungseinrichtung erhält so eine Rückmeldung, das Aufnehmen der Bilddaten fortzusetzen oder zu beenden. Beispielsweise ist das Aufnehmen der Bilddaten fortzusetzen, wenn die bisher erfassten Bilddaten es nicht ermöglichen oder nicht geeignet sind, die Kopfmodelldaten und die Texturdaten zu bestimmen, so dass kein dreidimensionales Kopfmodell bestimmt oder berechnet werden kann. Vergleichbar ist das Aufnehmen der Bilddaten fortzusetzen, wenn zwar grundsätzlich ein dreidimensionales Kopfmodell bestimmt werden kann, hieraus aber (noch) nicht ein zweidimensionales Gesichtsbild bestimmt oder abgeleitet werden kann, welches zur biometrischen Gesichtserkennung auswertbare Gesichtsmerkmale bereitstellt. Findet die Personalisierung des ID-Dokuments beispielsweise in einem Bürgeramt statt, kann der Mitarbeiter den Aufnahmeprozess effizient durchführen, da noch im Verlauf des Aufnehmens der Bilddaten und / oder danach geprüft wird, ob Kopfmodelldaten / Texturdaten und / oder Gesichtsdaten bereitgestellt werden können. Ergänzend oder alternativ kann mindestens einer der Prüfprozesse nach einem ersten Abschluss des Aufnehmens von Bilddaten durchgeführt werden. In Abhängigkeit vom Ergebnis des Prüfprozesses können bei Bedarf weitere Bilddaten aufgenommen werden.

Die Kopfmodelldaten und die Texturdaten können in dem Speichermedium des ID-Dokuments gespeichert werden. Bei dieser Ausführungsform werden in Ergänzung zu den Gesichtsdaten die Kopfmodelldaten und die Texturdaten im Speichermedium des ID-Dokuments abgelegt. Wird das ID-Dokument (später) für eine Personenidentifizierung herangezogen, können entweder die Gesichtsdaten und / oder die Kopfmodelldaten mit den Texturdaten ausgelesen und mit Vergleichs- oder Referenzdaten verglichen werden. Hierbei besteht die Möglichkeit, aus den Kopfmodelldaten und den Texturdaten wahlweise ergänzende Gesichtsbilder abzuleiten, zum Beispiel in Ergänzung zu einem im Speichermedium des ID-Dokuments abgelegten zweidimensionalen Gesichtsbild, um hieraus (wahlweise ergänzende) biometrische Gesichtsmerkmale zu bestimmen, die separat oder in Kombination mit Gesichtsmerkmalen aus den Gesichtsdaten, die auf dem ID-Dokument gespeichert sind, zur Personenidentifizierung herangezogen werden können.

In der Datenverarbeitungseinrichtung können erste Merkmalsdaten bereitgestellt werden, die Informationen über Gesichtsmerkmale anzeigen, die aus dem zweidimensionalen Gesichtsbild bestimmbar sind. Bei dieser Ausführungsform sind die Gesichtsmerkmale nicht nur inhärent in den Gesichtsdaten enthalten. In der Datenverarbeitungsrichtung selbst liegen die ersten Merkmalsdaten vor, die Informationen über die Gesichtsmerkmale anzeigen. Die ersten Merkmalsdaten können in dem Speichermedium des ID-Dokuments gespeichert werden. Im Fall eines Identifizierungsprozesses ermöglicht es diese Ausgestaltung, Gesichtsmerkmale direkt aus dem Speichermedium auszulesen, die für die Identifizierung herangezogen werden können.

In der Datenverarbeitungseinrichtung können zweite Merkmalsdaten bereitgestellt werden, die Informationen über Gesichtsmerkmale anzeigen, die aus den Kopfmodelldaten und den Texturdaten bestimmbar sind. Die zweiten Merkmalsdaten betreffen Gesichtsmerkmale, die aus dem dreidimensionalen Kopfmodell für die Person bestimmbar sind. Die zweiten Merkmalsdaten können in dem Speichermedium des ID-Dokuments gespeichert werden. Die zweiten Merkmalsdaten können so für eine Personenidentifizierung direkt aus dem Speichermedium ausgelesen werden, bei der sich die Person mittels des ID-Dokuments ausweist.

Die Gesichtsdaten können einem der folgenden Standards entsprechend bereitgestellt und gespeichert werden: ISO / IEC 19794-5, ISO / IEC 39794-5 und einem hierzu aktualisierten Standard. Alternativ oder ergänzend können die Kopfmodelldaten und die Texturdaten einem dieser Standards entsprechend bestimmt werden.

Die Gesichtsdaten können mit zur biometrischen Gesichtserkennung auswertbaren Gesichtsmerkmalen dem Standard ISO / IEC 14496-2:2004 und einem hierzu aktualisierten Standard entsprechend bereitgestellt und gespeichert werden.

Das ID-Dokument kann Vorgaben von ICAO Doc 9303 entsprechend bereitgestellt werden.

In einer Ausführung kann ein Verfahren zum Identifizieren einer Person anhand biometrischer Gesichtsmerkmale vorgesehen sein, bei dem Bilddaten für eine zu identifizierende Person mittels einer Bildaufnahmeeinrichtung aufgenommen werden und in einer Datenverarbeitungseinrichtung Folgendes vorgesehen ist: Bestimmen von Kopfmodelldaten, die ein dreidimensionales Kopfmodell für zu identifizierende die Person repräsentieren, sowie von dem dreidimensionalen Kopfmodell zugeordneten Texturdaten unter Verwendung der Bilddaten; Bestimmen von Gesichtsdaten aus den Kopfmodelldaten und der Texturdaten; Bestimmen der Gesichtsmerkmalen aus den Gesichtsdaten; Bereitstellen von aus einem Speichermedium eines ID-Dokuments ausgelesenen Gesichtsvergleichsdaten; Bestimmen von Gesichtsvergleichsmerkmalen aus den Gesichtsvergleichsdaten; Vergleichen der Gesichtsmerkmale und der Gesichtsvergleichsmerkmale und Identifizieren der Person, wenn die Gesichtsmerkmale und der Gesichtsvergleichsmerkmale wenigstens teilweise übereinstimmen.

In Verbindung mit dem ID-Dokument und / oder dem Verfahren zum Identifizieren einer Person anhand biometrischer Gesichtsmerkmale können die vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung erläutert. In den Figuren zeigen:
- Fig. 1: eine schematische Darstellung einer Anordnung zum Personalisieren eines ID-Dokuments;
- Fig. 2: eine schematische Blockdarstellung für ein Verfahren zum Personalisieren eines ID-Dokuments;
- Fig. 3: eine schematische Darstellung einer Anordnung zum Identifizieren einer Person anhand biometrischer Gesichtsmerkmale und
- Fig. 4: eine schematische Blockdarstellung für ein Verfahren zum Identifizieren einer Person anhand biometrischer Gesichtsmerkmale.

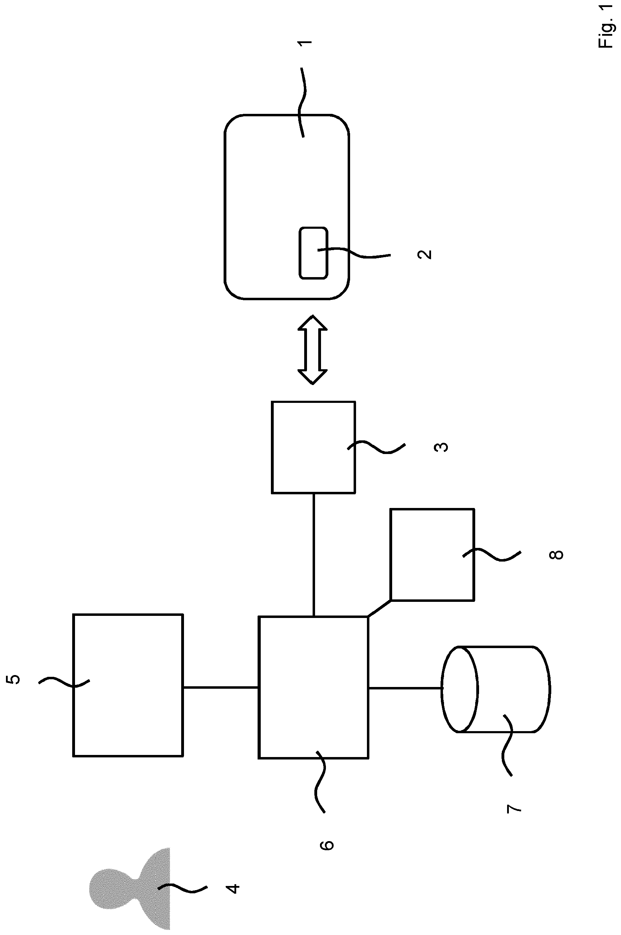

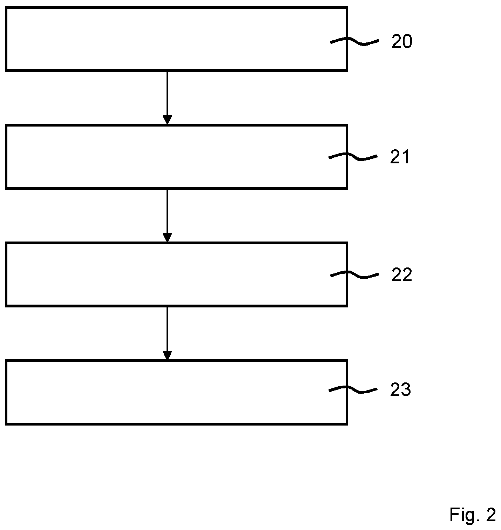

Fig. 1 zeigt eine Anordnung zum Personalisieren eines ID-Dokuments, welches nachfolgend mit dem Bezugszeichen 1 versehen ist. Fig. 2 zeigt eine schematische Blockdarstellung für ein Verfahren zum Personalisieren des ID-Dokuments 1.

Das ID-Dokument 1 weist ein elektronisches Speichermedium 2 auf, in dem elektronische Daten gespeichert werden können, die mit Hilfe eines Schreib- / Lesegeräts 3 in das elektronische Speichermedium 2 geschrieben werden und aus diesem ausgelesen werden können. Das elektronische Speichermedium 2 kann mittels eines Chipbausteins ausgebildet sein. Bei dem ID-Dokument 1 handelt es sich beispielsweise um ein Dokument in Karten- oder Buchform, in welches das Speichermedium 2 integriert ist, beispielsweise als Chipbaustein in einer Plastikkarte oder einer Plastikseite.

Zum Personalisieren des ID-Dokuments für eine Person 4 sollen Gesichtsdaten in das Speichermedium 2 geschrieben werden. Hierzu werden für die Person 4 mit Hilfe einer Bildaufnahmeeinrichtung 5 Bilddaten erfasst (Schritt 20 in Fig. 2), derart, dass unter Verwendung der Bilddaten mit Hilfe einer Datenverarbeitungseinrichtung 6 Kopfmodelldaten, die ein dreidimensionales Kopfmodell der Person 4 repräsentieren, und den Kopfmodelldaten zugeordnete Texturdaten berechnet oder bestimmt werden können (Schritt 21). Bildaufnahmeeinrichtungen, die geeignet sind, derartige Bilddaten zu erfassen, sind in verschiedenen Ausführungsformen als solche bekannt. Beispielsweise kann die Technik des strukturierten Lichts verwendet werden, bei der zum Beispiel ein zufälliges Muster von Lichtpunkten auf das abzubildende Objekt gegeben wird, also im vorliegenden Fall das Gesicht oder den gesamten Kopf der Person 4. Auch die Technik der Punktstapel-Projektion oder der Landmarkenparallaxenmessung, die als solche bekannt sind, können zum Einsatz kommen.

Im Ergebnis werden die Kopfdaten bestimmt, welche das dreidimensionale Modell repräsentieren, zum Beispiel im sogenannten STL-Format (Stereolithographie) oder in Form einer Vertex-Darstellung gemäß ISO-IEC 39794-5 Anhang D.3. Weiterhin werden die Texturdaten bestimmt, die eine lokale Textur des Kopfes beschreiben (RGB-Bild) zusammen mit einer Abbildungsvorschrift der einzelnen Pixel auf das dreidimensionale Modell).

Aus dieser dreidimensionalen Repräsentation des Kopfes der Person 4 werden dann die Gesichtsdaten in der Datenverarbeitungseinrichtung 6 berechnet oder bestimmt (Schritt 22), die ein zweidimensionales Gesichtsbild der Person 4 zeigen. Das zweidimensionale Gesichtsbild kann einer der folgenden Standards entsprechend bestimmt werden: ISO-IEC 19794-5 und ISO-IEC 39794-5. Die Gesichtsdaten werden dann in das Speichermedium 2 geschrieben und stehen so auf dem ID-Dokument 1 für einen Identifizierungsprozess als auslesbare elektronische Daten zur Verfügung (Schritt 23). Hierbei kann vorgesehen sein, dass die Kopfmodelldaten und die den Kopfmodelldaten zugeordneten Texturdaten mittels des Schreib- / Lesegeräts 3 in dem Speichermedium 2 gespeichert werden.

Ergänzend können die die Kopfmodelldaten und die den Kopfmodelldaten zugeordneten Texturdaten in einer Datenbank 7 hinterlegt werden.

Über eine Benutzerschnittstelle 8 können Informationen an einen Nutzer ausgegeben und / oder Benutzereingaben empfangen werden, zum Beispiel betreffend den Prozess des Erfassens der Bildaufnahmen mit der Bildaufnahmeeinrichtung 5.

Das beschriebene Verfahren ermöglicht es, ein standardkonformes zweidimensionales Gesichtsbild für die Person 4 zu bestimmen, um dieses dann im ID-Dokument 1 abzulegen. Aus dem zweidimensionalen Gesichtsbild (Gesichtsdaten) können biometrische Gesichtsmerkmale bestimmt werden, um einen Personenidentifizierungsprozess durchzuführen.

Aus den Kopfmodelldaten / Texturdaten kann eine Mehrzahl von unterschiedlichen Gesichtsbildern bestimmt werden. Der Prozess des Erfassens der Bilddaten ist mittels des geschaffenen Verfahrens für die Person 4 vereinfacht, da die strengen Anforderungen im Zusammenhang mit dem Aufnehmen von für die Gesichtserkennung geeigneten zweidimensionalen Gesichtsbildern nicht notwendig sind. Die Kopfmodelldaten / Texturdaten ermöglichen es, Gesichtsbilder oder Fotos aus beliebiger simulierter Entfernung und Richtung zu bestimmen oder zu generieren, einschließlich eines Halbprofils. Auf diese Weise wird die Nutzung der biometrischen Erkennung basierend auf Gesichtsmerkmalen erweitert, zum Beispiel betreffend eine logische oder physische Zugangskontrolle.

Beim Aufnehmen der Bilddaten mit Hilfe der Bildaufnahmeeinrichtung 5 kann vorgesehen sein, die Bilddaten als eine Bildabfolge (Videostream) aufzunehmen, um so die Bestimmbarkeit des dreidimensionalen Kopfmodells zu verbessern. Fehler beim Berechnen des dreidimensionalen Kopfmodells können mittels der höheren Anzahl von Abbildungen reduziert werden.

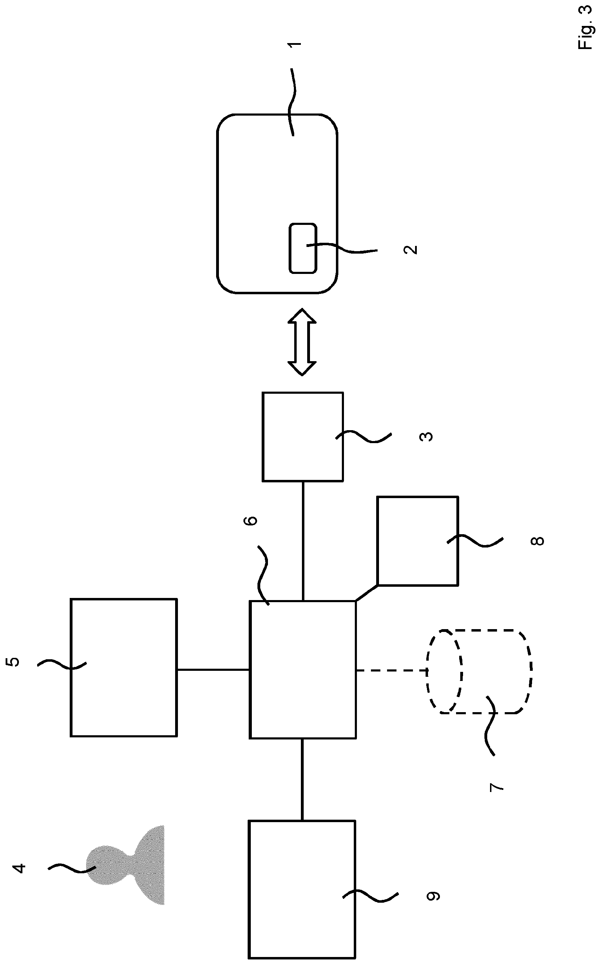

Fig. 3 zeigt eine schematische Darstellung einer Anordnung zum Identifizieren einer zu identifizierenden Person 4 anhand biometrischer Gesichtsmerkmale. Beispielsweise kann die Anordnung in Verbindung mit einem automatischen Grenz- oder Personenkontrollsystem Anwendung finden. Zum Beispiel ist ein System bekannt, welches als "eGate" bezeichnet und insbesondere an Flughäfen eingesetzt wird.

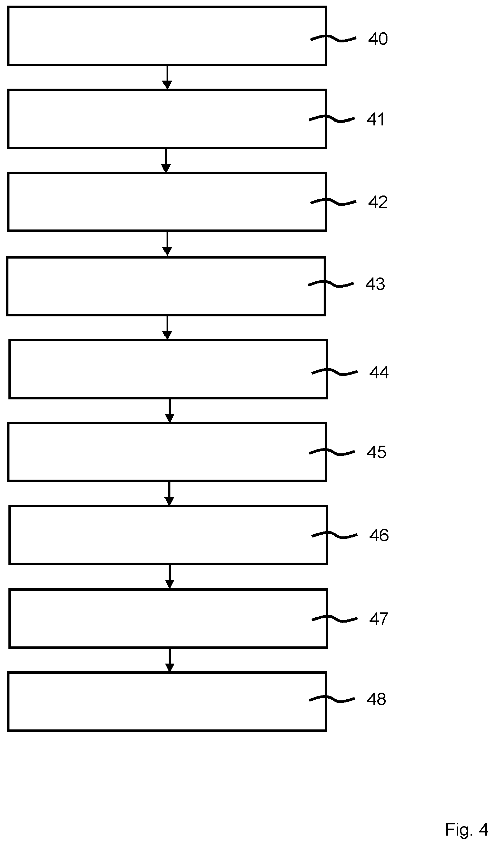

Im Folgenden wird unter Bezugnahme auf die Fig. 3 und 4 ein Verfahren zum Identifizieren einer Person 4 anhand biometrischer Gesichtsmerkmale erläutert. Mit Hilfe der Bildaufnahmeeinrichtung 5 werden Bilddaten für die zu identifizierende Person 4 aufgenommen (Schritt 40), um hieraus dann Kopfmodelldaten sowie zugeordnete Texturdaten zu bestimmen (Schritt 41), wie dies vorangehend erläutert wurde. Ausgehend von den Kopfmodelldaten und den Texturdaten können ein oder mehrere zweidimensionale Gesichtsbilder (Gesichtsdaten) für die zu identifizierende Person 4 bestimmt werden (Schritt 42). Aus den Gesichtsdaten werden sodann ein oder mehrere biometrische Gesichtsmerkmale ermittelt (Schritt 44).

Mit Hilfe des Schreib- / Lesegeräts 3 werden aus dem elektronischen Speichermedium 2 des ID-Dokuments 1 Gesichtsvergleichs- oder Gesichtsreferenzdaten ausgelesen (Schritt 45), die ein zweidimensionales Gesicht der zu identifizierenden Person 4 repräsentieren. Bei dieser Ausführungsform können die Gesichtsvergleichsdaten ausgehend von zweidimensionalen Bildaufnahmen und / oder Bildaufnahmen bestimmt sein, die zuvor für das Berechnen eines dreidimensionalen Kopfmodells herangezogen wurden. Aus den Gesichtsvergleichsdaten werden mittels der Datenverarbeitungseinrichtung 6 Gesichtsvergleichsmerkmale bestimmt (Schritt 46), die dann mit den Gesichtsmerkmalen verglichen werden (Schritt 47). Bei mindestens teilweise Übereinstimmung der Gesichtsmerkmale und der Gesichtsvergleichsmerkmale wird die zu identifizierende Person 4 identifiziert (Schritt 48). Anderenfalls erfolgt keine Identifizierung der Person 4. In Abhängigkeit vom Ergebnis der Personenidentifizierung kann zum Beispiel eine Zugangskontrolleinrichtung 9 gesteuert werden, sei es beispielweise auf einem Flughafen, für ein Werksgelände oder irgendeinen anderen Bereich, für den der Zugang geregelt wird.

Während die Gesichtsdaten (zweidimensionales Gesichtsbild) bei der Ausführungsform in den Fig. 1 und 2 aus den Kopfmodelldaten / Texturdaten bestimmt und zum Personalisieren des ID-Dokuments 1 verwendet werden, sieht das Ausführungsbeispiel gemäß den Fig. 3 und 4 vor, die Gesichtsdaten zur Personenidentifizierung zu bestimmen, beispielsweise in Verbindung mit einer Zugangs- oder Eingangskontrolle, wobei auch hier das für die Identifizierung herangezogene zweidimensionale Gesichtsbild aus den Kopfmodelldaten und Texturdaten bestimmt wird.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: ID-Dokument
- 2: Speichermedium
- 3: Schreib- / Lesegerät
- 4: zu identifizierende Personen
- 5: Bildaufnahmeeinrichtung
- 6: Datenverarbeitungseinrichtung
- 7: Datenbank
- 20 ... 23: Verfahrensschritte
- 40 ... 48: Verfahrensschritte

## Patentansprüche

1. Verfahren zum Personalisieren eines ID-Dokuments, mit
- Bereitstellen von Bilddaten für eine Person (4) in einer Datenverarbeitungseinrichtung (6), wobei die Bilddaten hierbei mittels einer Bildaufnahmeeinrichtung (5) aufgenommen und zumindest im Verlauf des Aufnehmens der Bilddaten wenigstens eine der folgenden Prüfungen ausgeführt wird:
- Prüfen, ob während des Aufnehmens der Bilddaten erzeugte Bilddaten geeignet sind, die Kopfmodelldaten und die Texturdaten zu bestimmen; und
- Prüfen, ob während des Aufnehmens der Bilddaten aus zuvor bestimmten Kopfmodelldaten und Texturdaten bestimmte Gesichtsdaten geeignet sind, das zwei-dimensionale Gesichtsbild mit den zur biometrischen Gesichtserkennung aus-wertbaren Gesichtsmerkmalen zu bilden;
- Bestimmen von Kopfmodelldaten, die ein dreidimensionales Kopfmodell für die Person (4) repräsentieren, unter Verwendung der Bilddaten sowie von dem dreidimensionalen Kopfmodell zugeordneten Texturdaten in der Datenverarbeitungseinrichtung (6);
- Bestimmen von Gesichtsdaten, die ein zweidimensionales Gesichtsbild mit zur biometrischen Gesichtserkennung auswertbaren Gesichtsmerkmalen für die Person (4) repräsentieren, aus den Kopfmodelldaten und der Texturdaten in der Datenverarbeitungseinrichtung (6); und
- Speichern der Gesichtsdaten in einem Speichermedium (2) eines ID-Dokuments (1).

2. Verfahren nach Anspruch 1, **dadurch gekennzeichnet, dass** beim Bestimmen der Gesichtsdaten geprüft wird, welche zur biometrischen Gesichtserkennung aus-wertbaren Gesichtsmerkmale die Gesichtsdaten enthalten.

3. Verfahren nach Anspruch 1 oder 2, **dadurch gekennzeichnet, dass** in der Datenverarbeitungseinrichtung (6) auf das Prüfen Rückmeldedaten bereitgestellt und über eine Ausgabeeinrichtung (8) ausgegeben werden, die wenigstens eine der folgenden Rückmeldungen anzeigen:
- das Aufnehmen der Bilddaten ist fortzusetzen, wenn die Bilddaten nicht geeignet sind, die Kopfmodelldaten und die Texturdaten zu bestimmen;
- das Aufnehmen der Bilddaten kann beendet werden, wenn die Bilddaten geeignet sind, die Kopfmodelldaten und die Texturdaten zu bestimmen;
- das Aufnehmen der Bilddaten ist fortzusetzen, wenn die Gesichtsdaten nicht geeignet sind, das zweidimensionale Gesichtsbild mit den zur biometrischen Gesichtserkennung auswertbaren Gesichtsmerkmalen zu bilden; und
- das Aufnehmen der Bilddaten kann beendet werden, wenn die Gesichtsdaten geeignet sind, das zweidimensionale Gesichtsbild mit den zur biometrischen Gesichtserkennung auswertbaren Gesichtsmerkmalen zu bilden.

4. Verfahren nach mindestens einem der vorangehenden Ansprüche, **dadurch gekennzeichnet, dass** die Kopfmodelldaten und die Texturdaten in dem Speichermedium des ID-Dokuments (1) gespeichert werden.

5. Verfahren nach mindestens einem der vorangehenden Ansprüche, **dadurch gekennzeichnet, dass** in der Datenverarbeitungseinrichtung (6) erste Merkmalsdaten bereitgestellt werden, die Informationen über Gesichtsmerkmale anzeigen, die aus dem zweidimensionalen Gesichtsbild bestimmbar sind.

6. Verfahren nach Anspruch 5, **dadurch gekennzeichnet, dass** die ersten Merkmalsdaten in dem Speichermedium (2) des ID-Dokuments (1) gespeichert werden.

7. Verfahren nach mindestens einem der vorangehenden Ansprüche, **dadurch gekennzeichnet, dass** in der Datenverarbeitungseinrichtung (6) zweite Merkmalsdaten bereitgestellt werden, die Informationen über Gesichtsmerkmale anzeigen, die aus den Kopfmodelldaten und den Texturdaten bestimmbar sind.

8. Verfahren nach Anspruch 7, **dadurch gekennzeichnet, dass** die zweiten Merkmalsdaten in dem Speichermedium (2) des ID-Dokuments (1) gespeichert werden.

9. Verfahren nach mindestens einem der vorangehenden Ansprüche, **dadurch gekennzeichnet, dass** die Gesichtsdaten einem der folgenden Standards entsprechend bereitgestellt und gespeichert werden: ISO / IEC 19794-5 und ISO / IEC 39794-5.

10. Verfahren nach mindestens einem der vorangehenden Ansprüche, **dadurch gekennzeichnet, dass** die Gesichtsdaten mit zur biometrischen Gesichtserkennung auswertbaren Gesichtsmerkmalen dem Standard ISO / IEC 14496-2:2004 entsprechend bereitgestellt und gespeichert werden.

11. Verfahren nach mindestens einem der vorangehenden Ansprüche, **dadurch gekennzeichnet, dass** das ID-Dokument (1) Vorgaben von ICAO Doc 9303 entsprechend bereitgestellt wird.

12. ID-Dokument (1), aufweisend Gesichtsdaten in einem Speichermedium (2), die ein zweidimensionales Gesichtsbild mit zur biometrischen Gesichtserkennung auswertbaren Gesichtsmerkmalen für eine Person (4) repräsentieren, wobei in dem Speichermedium (2) zusätzlich Kopfmodelldaten und Texturdaten für ein dreidimensionales Kopfmodell gespeichert sind, aus denen die Gesichtsdaten bestimmt sind.

13. Verfahren zum Personalisieren eines ID-Dokuments, mit
- Bereitstellen von Bilddaten für eine Person (4) in einer Datenverarbeitungseinrichtung (6);
- Bestimmen von Kopfmodelldaten, die ein dreidimensionales Kopfmodell für die Person (4) repräsentieren, unter Verwendung der Bilddaten sowie von dem dreidimensionalen Kopfmodell zugeordneten Texturdaten in der Datenverarbeitungseinrichtung (6);
- Bestimmen von Gesichtsdaten, die ein zweidimensionales Gesichtsbild mit zur biometrischen Gesichtserkennung auswertbaren Gesichtsmerkmalen für die Person (4) repräsentieren, aus den Kopfmodelldaten und der Texturdaten in der Datenverarbeitungseinrichtung (6); und
- Speichern der Gesichtsdaten für das zweidimensionale Gesichtsbild sowie der Kopfmodelldaten und der Texturdaten für das dreidimensionale Kopfmodell in einem Speichermedium (2) eines ID-Dokuments (1).
